# EUROPEAN PATENT APPLICATION

(11) **EP 2 930 409 A1**
(43) Date of publication of application: **14.10.2015**
(21) Application number: 15161904.6
(22) Date of filing: 31.03.2015
(51) Int. Cl.: F16K 31/08

(54) **Apparatus and methods for passive pressure modulation**

(30) Priority: 08.04.2014 US 201414247682
(71) Applicant: Yokogawa Electric Corporation, Tokyo 180-8750 (JP)
(72) Inventor: Kosterev, Anatoliy A., Pearland, TX Texas 77584 (US)
(74) Representative: Henkel, Breuer & Partner

(57) **Abstract**

Aspects of the disclosure include pressure modulation of a fluid contained in a compartment and/or controlled release of an amount of such a fluid. In one aspect, an apparatus having a magnetic locking mechanism (540) can passively control the cyclical injection and release of fluid from the apparatus, whereby pressure of the fluid in the compartment can switch between first and second pressures.

## Description

### TECHNICAL FIELD

Aspects of the disclosure relate generally to pressure modifications to fluids and more specifically, to apparatus and methods for passive pressure modulation of a fluid in a contained space.

### BACKGROUND

Pressure modulation usually refers to a controlled temporal modification of hydrostatic pressure of a fluid contained in an enclosure, such as vessel, a vat, or any other container. Conventional technologies for pressure modulation can be categorized into active-control technologies and passive-control technologies. Active-control technologies generally include solenoid-driven valves or linear motor-driven valves combined with pressure sensors and control electronics, whereas passive-control technologies usually rely on complex arrangements of pneumatic channels and valves. Such technologies usually lack simplicity of implementation, requiring configuration of complex electromechanical systems requiring electrical power that may not be available or may be prohibited due to safety considerations. In addition, such technologies can require the manufacturing of a complex arrangement of channels and the installation of several control valves, which can be expensive and time-consuming and results in reduced cost efficiency.

### SUMMARY

Aspects of the disclosure include pressure modulation of a fluid contained in a compartment and/or controlled release of an amount of such a fluid. In one aspect, an apparatus having a magnetic locking mechanism can passively control the cyclical injection and release of fluid from the apparatus, whereby pressure of the fluid in the compartment can switch between first and second pressures.

### BRIEF DESCRIPTION OF THE DRAWINGS

The accompanying drawings are an integral part of the disclosure and are incorporated into the present specification. The drawings illustrate example embodiments of the disclosure and, in conjunction with the description and claims, serve to explain at least in part various principles, features, or aspects of the disclosure. Certain embodiments of the disclosure are described more fully below with reference to the accompanying drawings, which are not drawn to scale. However, various aspects of the disclosure can be implemented in many different forms and should not be construed as being limited to the implementations set forth herein. Like numbers refer to like, but not necessarily the same or identical, elements throughout.
**FIG. 1** illustrates an example of a valve for pressure modulation in accordance with one or more aspects of the disclosure.
**FIG. 2** illustrates an example of a system for pressure modulation in accordance with at least certain aspects of the disclosure.
**FIG. 3** illustrates example operations of a valve for pressure modulation in accordance with at least certain aspects of the disclosure.
**FIG. 4** depicts an example pressure modulation profile in accordance with at least certain aspects of the disclosure.
**FIGs. 5A-B** illustrate elevation and cross-sectional views of an example valve for pressure modulation in accordance with at least certain aspects of the disclosure.
**FIG. 6** illustrates example operations of a valve in accordance with at least certain aspects of the disclosure.
**FIGs. 7-9** present examples of other valves for pressure modulation in accordance with at least certain aspects of the disclosure.
**FIG. 10** illustrates an example method for pressure modulation in accordance with at least certain aspects of the disclosure.

### DETAILED DESCRIPTION

The disclosure recognizes and addresses, in at least certain aspects, the issue of pressure modulation in a compartment. More specifically, yet not exclusively, the disclosure provides devices, systems, and/or techniques for modulation of pressure of a fluid *(e.g.,* a gas, a liquid, or a combination thereof) in a compartment based at least on passively automated operation. Such devices, systems, and/or techniques can permit passively controlled release of an amount of fluid from the compartment. As described in greater detail below, in at least certain aspects, the disclosure provides a magnetic locking mechanism and a restoration mechanism that can passively control the cyclical injection and release of fluid from an enclosure, whereby pressure of the fluid in the enclosure and a compartment fluidically coupled thereto can switch between a first pressure and a second pressure as function of time in response to injection of a constant or nearly constant flow of fluid into the enclosure. Such mechanisms can provide passive control of the switching, with the ensuing simplicity, reliability, and/or ease of cost management of pneumatic equipment that relies on the apparatuses, devices, and/or systems of this disclosure. In one example, the magnetic locking mechanism can include a permanent magnet coupled to the enclosure and a magnetic member *(e.g.,* a suitably shaped magnetic solid) that is magnetically coupled to the permanent magnet. The magnetic member can be movably disposed within the enclosure. A restoration mechanism can be embodied in an elastic member or device (such as a spring) or can leverage the gravitational force exerted on the magnetic member. In certain examples, the enclosure can define at least two openings that permit injection of a fluid into the enclosure and release or removal of at least a portion of the fluid from the enclosure. The injected fluid can exert a hydrostatic force on the magnetic member. Based at least in part on the magnitude of the pressure of the fluid injected into the enclosure, the magnetic member can be displaced from a locking position (preventing fluid from being released from the enclosure) to a position within the enclosure that causes fluid to be released from the enclosure. Release of fluid from the enclosure can yield a reduction of the pressure of the fluid within the enclosure and can permit the restoration mechanism to relocate the magnetic member to the locking position. Further injection of fluid into the enclosure can yield addition displacement and restoration of the magnetic member, causing the cyclical opening and shutting of the enclosure that yields the pressure modulation.

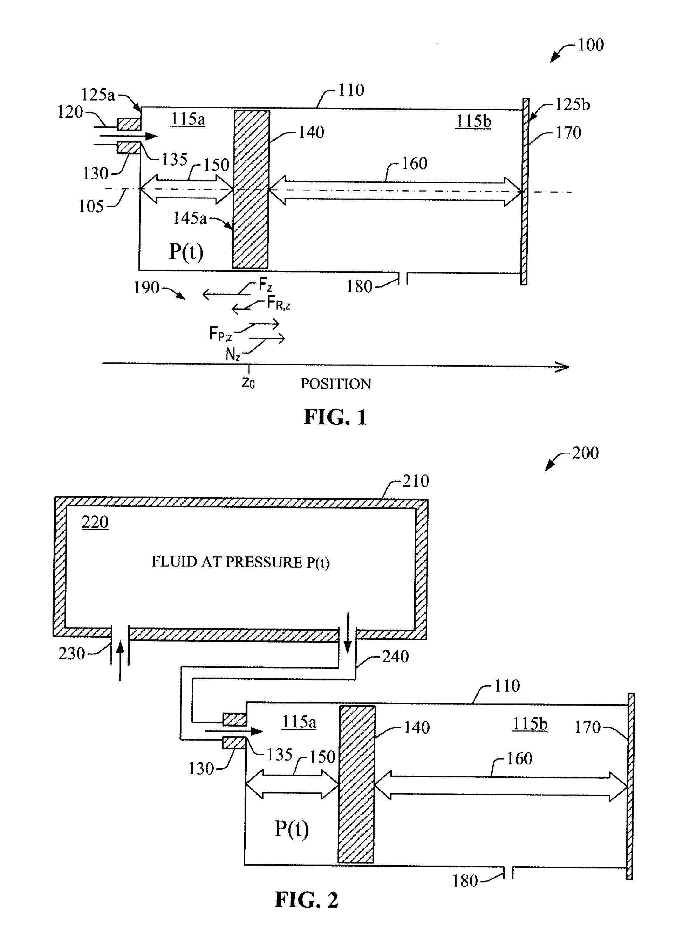

With reference to the drawings, **FIG. 1** presents a cross-section diagram of an example valve 100 that can be used in a method of pressure modulation in accordance with at least certain aspects of the disclosure. The example valve 100 can embody or constitute an apparatus for pressure modulation in accordance with one or more aspects of the disclosure. The example valve 100 can include an enclosure 110, which can have a predetermined symmetry about a longitudinal axis 105, where the symmetry can be defined by the cross section of the enclosure 110. In certain embodiments, the enclosure 110 can be embodied in a tube (such as a gas cylinder) or case that is substantially axially symmetric. In certain example embodiments, the cross-section of the tube can have a circular or substantially circular symmetry (e.g., a cylindrical cross-section) about the longitudinal axis 105. In other embodiments, the enclosure 110 can be embodied in a solid sleeve having a substantially square or rectangular cross-section, with substantially 4-fold or 2-fold rotational symmetry about the longitudinal axis 105 *(e.g., C₄* or *C₂* symmetry). As illustrated, the enclosure 110 can have or otherwise define at least two openings: a first opening configured to receive a fluid via an inlet conduit 120, and a second opening configured to release or otherwise exhaust at least a portion of the received fluid via an outlet conduit 180. The inlet conduit 120 and/or the outlet conduit 180 can be mechanically coupled (e.g., soldiered, bolted, or otherwise attached) to or otherwise integrally formed with the enclosure 110. It should be appreciated that, in at least some embodiments, the example valve can include other openings (e.g., an opening (not depicted) in stoppage member 170) that can permit the release of at least a portion of the received fluid without reliance on the outlet conduit 180. As illustrated, the first opening is disposed at or near a proximal end 125a of the enclosure 110, and the second opening can be disposed at or near a distal and/or opposite end 125b of the enclosure 110. While not depicted in **FIG. 1****,** other openings may be present in the enclosure 110, where at least a portion of the other openings may be configured to release or otherwise exhaust fluid from the volume 115.

The valve 100 also can include a coupling member 130 that can be mechanically coupled to or otherwise integrally formed with at least a portion of the inlet conduit 120. For example, the coupling member 130 can be a threaded body formed on the inlet conduit 120. Although the coupling member 130 is depicted as partially encompassing the inlet conduit 120 and in mechanical contact with the enclosure 110, it is contemplated that in certain embodiments the coupling member 130 substantially and/or entirely encompasses the inlet conduit 110 or is disposed at distance from the proximal end 125a of the enclosure 110. In certain embodiments *(e.g.,* the example system 200 presented in **FIG. 2****),** the coupling member 130 can permit attachment of the enclosure 110 to a second enclosure 210 that defines a compartment 220 having a specific volume, which may be referred to as a "control volume". To at least such an end, in one aspect, the coupling member 130 can be configured to be mechanically and/or fluidically coupled to a conduit 240 of **FIG. 2** *(e.g.,* by way of a pipe, a hose, or other flexible or non-flexible tubing). Such a conduit may be referred to herein as outlet conduit 240. As illustrated, the enclosure 210 of **FIG. 2** can define a first opening configured to receive fluid (which can be pressurized or otherwise compressed to a certain pressure) via an inlet conduit 230. In one example, the fluid can be received through the inlet conduit 230 of **FIG. 2** at a constant or substantially constant flow φ₀. Further, in certain embodiments, the inlet conduit 230 can embody or can include a passive device (which may be referred to as critical orifice; not shown in **FIG. 2****)** that generates a constant mass flow into the control volume associated with the compartment 220 in response to the pressure at the inlet conduit 230 being substantially constant and exceeding the pressure in the controlled volume by at least a factor of two, for example. In certain embodiments, the enclosure 210 can constitute a compartment of optical spectroscopy equipment, such as a tunable diode laser spectroscopy (TDLS) analyzer, and the fluid contained in the enclosure 210 can be a gas (e.g., instrument gas, nitrogen, or a noble gas), liquid, or a mixture thereof that can be probed via such equipment.

With continued reference to **FIGs. 1-2****,** the enclosure 210 can also define a second opening configured to release at least a portion of the fluid via the outlet conduit 240, which can be mechanically coupled to or otherwise integrally formed with the enclosure 210. In steady state, for example, fluid can be released from the enclosure 210 at a substantially constant flow φ₀. At least a portion of such a fluid within the compartment 220 can be injected into the valve 100 via the first opening 135 at the proximal end 125a of the enclosure 110. Accordingly, in one aspect, the pressure of the fluid contained in the compartment 115a of the valve 100 can be the same or substantially the same as the pressure of the fluid in the compartment 220. In view of at least the operation of the valve 100 as described herein, the fluid within the compartment 220 can have a time-dependent hydrostatic pressure *P(t)* (where P represents magnitude of pressure and t represents time).

As depicted in **FIG. 1****,** the illustrated valve 100 can include a member 140 movably disposed within the enclosure 110. In one example, the member 140 can be configured to separate the volume defined by the enclosure 110 into two compartments, 115a and 115b. The member 140 can hermetically seal or substantially hermetically seal the compartment 115a. As such, in one aspect, the member 140 can substantially fit the cross-sectional space defined by the enclosure 110. In one example embodiment in which the enclosure 110 defines a substantially square cross-section, the member 140 can have at least one surface that substantially fits into the space defined by such a cross-section. In another example embodiment in which the enclosure 110 defines a cylindrically-symmetric cross-section, the member 140 can have a substantially matching cylindrically-symmetric cross-section. More specifically, yet not exclusively, the enclosure 110 can be embodied in a tube of circular cross-section, and the member 140 can be embodied a solid body having a cross-section that substantially matches the circular cross-section of the tube. In certain embodiments, the member 140 can be solid (either rigid or semi-rigid) and can be embodied in or can include a ball, a piston, a moving plate, or the like.

The member 140 can be mechanically and/or magnetically coupled to a holding member 150 (which also may be referred to as a holding device 150). In one example, the holding member 150 can include multiple devices or members. In addition, the holding member 150 is configured to exert a force F(r), such as a magnetic force, upon the member 140. Here, F(r) may be referred to as a "holding force" and represents a position-dependent force vector, and r is a position vector of the member 140 with respect to the holding member 150. At least in order to permit such a magnetic coupling, each of the member 140 and the holding member 150 can be formed of or otherwise constituted by a magnetic material-*e.g*., Fe; Ni; Co; a Fe-Ni alloy; a Fe-Co alloy; a Ni-Co alloy; a Fe-Ni-Co alloy; rare-earth-based magnets, such as a Nd-based magnet; a material including one or more of *R,* Fe, Ni, or Co, where R is a rare earth element, such as Nd; or the like. For a suitable combination of the polarity of the magnetic moment of the respective materials forming or otherwise constituting the member 140 and the holding member 150, the magnetic force exerted on the member 140 can attract it towards the holding member 150. As illustrated in diagram 190, such a magnetic force can have a component *F_{z}* along a direction z that is substantially normal to a surface 145a of the member 140.

In view of the hermetic or substantially hermetic seal of the compartment 115a that is provided by the member 140 and at least the magnetic force that can attract the member 140 to the holding member 150, the member 140 can be referred to as "locking member 140" because such a member can lock in or otherwise confine fluid injected into the compartment 115a. Yet, in another aspect, the fluid *(e.g.,* a gas, liquid, or combination thereof) injected into the compartment 115a can exert a hydrostatic force **F_{P}** on the locking member 140. As illustrated in the diagram 190, such a hydrostatic force can have a component *F_{P,z}* along the longitudinal direction of the enclosure 110, and can tend to separate the locking member 140 from the holding member 150. Without intending to be bound by theory and/or modeling, the magnitude of *F_{P,z}* can be determined by the pressure *P(t)* (where P represents magnitude of pressure and *t* represents time) of the fluid that is injected into the compartment 115a and the cross-sectional area (*S*) of the enclosure 110 according to the following expression: *F_{P,z} = P(t)* · *S.*

The position of the locking member 140 within the enclosure 110 *(e.g.,* a position along the z direction) can be determined at least in part by the holding force **F(r)** *(e.g.,* a magnetic force) and the hydrostatic force **F_{P}**. More specifically, yet not exclusively, in a scenario in which the magnitude of the holding force component *F_{z}* is greater than the hydrostatic force component *F_{P,z},* the locking member 140 can be disposed within the enclosure 110 at locking position **r₀**, in which the locking member 140 can be in mechanical contact with the holding member 150. The locking position **r₀** (which is a three-tuple position vector) represents the position of the center of mass of the locking member 140, and has a component *z₀* along the longitudinal direction of the valve 100. As fluid enters into the compartment 115a and the locking member 140 remains in the locking position **r₀**, pressure *P(t)* of the fluid can increase with time.

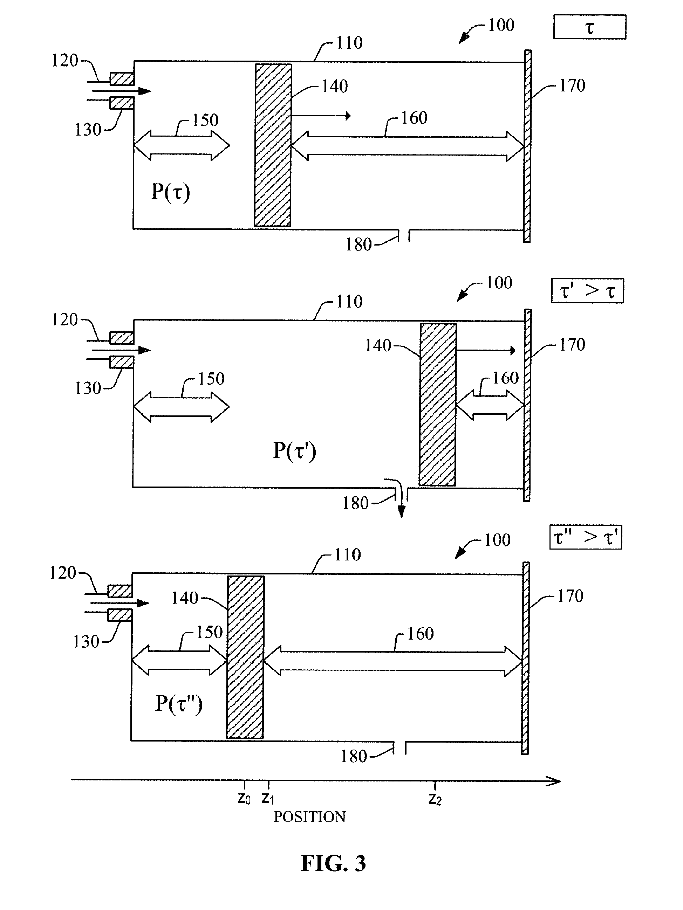

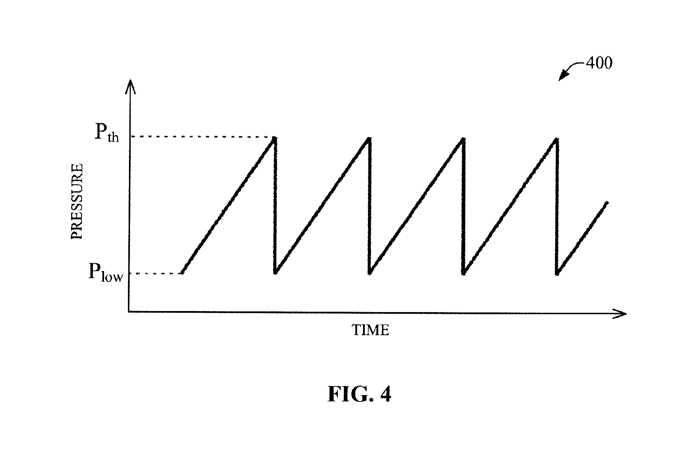

As the pressure *P(t)* of the fluid within the compartment 115a increases, so does the hydrostatic force exerted on the locking member 140. Such a pressure may be referred to as valve pressure. As illustrated in **FIG. 3** and with reference thereto, at a time τ at which the holding force component *F_{z}* is less than the hydrostatic force component *F_{P,z}*, the locking member 140 can be displaced (represented with an arrow in **FIG.** 3) from the locking position **r₀** along the direction parallel to the longitudinal axis 105 of the valve 100. Without intending to be bound by theory and/or modeling, it should be appreciated that, in one aspect, such a displacement can originate from the imbalance between the holding force and the hydrostatic force, where the imbalance causes the locking member 140 to move towards a second end 125b (which can be referred to as a distal end) of the enclosure 110. Accordingly, as depicted in **FIG. 4****,** the valve pressure can increase from an initial pressure *P_{low} (e.g.,* substantially atmospheric pressure) up to a value *Pₜₕ* at which the locking member can be initially displaced from the locking position **r₀**.

In an example embodiment wherein the holding force is a magnetic force, the magnitude (which also may referred to as the strength) of the holding force decreases as the separation Δ*z* between the holding member 150 and the locking member 140 increases. For example, without intending to be bound by theory and/or modeling, the magnitude of the holding force can decrease rapidly with increasing Δ*z*, decreasing as the as 7^{th} power of distance at large Δ*z*. It should be appreciated that, in one aspect, such a rapid decrease of the holding force can create instability (*e.g*., positive feedback) when the hydrostatic force slightly exceeds the holding force. It should further be appreciated that reliance on an elastic force as the holding force can tend to stabilize the movement of the locking member 140 (which can be deemed as negative feedback in that the elastic force can stabilize the position of the locking member 140) with an ensuing mechanical equilibrium condition in which pressure within the valve 100 is stabilized at a specific level. Accordingly, for a holding force that is primarily a magnetic force, in one aspect, after the time τ, the fluid within the valve can move the locking member 140 with increasing acceleration along the longitudinal axis 105 towards the distal end 125b of the valve 100. As illustrated in **FIG. 3****,** at a time τ' > τ, the locking member 140 can move beyond the outlet conduit 180 and the valve 100 is opened, permitting the fluid to be released from the valve 100 via the outlet conduit 180. Release of fluid from valve 100 can cause the valve pressure to drop, as illustrated in **FIG. 4****.**

As depicted in **FIG. 1****,** the example valve 100 also can include a restoration member 160. The example restoration member 160 can exert a restoration force **F_{R}(r)** against the locking member 140 along a side of the locking member 140 opposite that of the holding member 150, where **F_{R}** represents a force vector and r represents position of the center of mass of the locking member 140. As illustrated in diagram 190, the restoration force **F_{R}(r)** can have a component *F_{R;z}* along the direction from the proximal end 125a to the distal end 125b. The restoration member 160 also may be referred to as a restoration mechanism 160 and/or a restoration device 160. In certain embodiments, in response to displacement, the restoration force tends to relocate the locking member 140 to a locking position in which the locking member 140 is in mechanical contact with the holding mechanism 150. It should be appreciated that in the locking position, the holding member 150 can exert a normal force N, which is the resulting force of the holding force **F(r₀)**, the hydrostatic for **F_{P}**, and the restoration force **F_{R}(r)**. As illustrated in diagram 190, the normal force N can have a component *N_{z}* along the direction of the longitudinal axis 105 of the valve 100. In one of such embodiments, the restoration force can be embodied in an elastic force. In addition, it should be appreciated that while the restoration mechanism 160 is illustrated as internal to or otherwise integrated in the valve 100, implementations in which the restoration mechanism 160 is external or otherwise associated to the valve 100 also are contemplated. For instance, the restoration force can be substantially independent of the location of the locking member 140 within the enclosure 110. For example, the restoration force **F_{R}(r)** can be a gravitational force and the restoration mechanism 160 can be embodied or can include a massive object that can provide the gravitational force. Put more simply, in one example, the valve 110 can be arranged along the direction of the gravitational force exerted by the Earth on the locking member 140, where the proximal end 125a is disposed closer to the Earth's surface than the distal end 125b. In this example, the gravitational force can be embodied in the weight of the locking member 140.

Regardless of the specific embodiment and associated restoration mechanism, the restoration member 160 can close the valve 100 by relocating the locking member 140 to its locking position **r₀** within the valve 100 after the valve 100 is open. **FIG. 3** illustrates the valve 100 in a closed condition at a time τ" > τ after the valve 100 is closed via the restoration member 160. The pressure *P(τ*"*)* is lower than the pressure *P(*τ*)* at which the locking member 140 can be displaced from the locking position.

Based on the description herein, it becomes apparent that example valve 100 can permit switching the pressure of a fluid in a compartment coupled to the valve 100 between a first pressure (*e.g., Pₜₕ*) and a second pressure (*e.g., P_{low}*), which is lower than the first pressure. Such a switching may be referred to as pressure modulation, and the difference between the first and second pressure may be referred to as modulation amplitude. Therefore, in one aspect, the example valve 100 (or any other valve in accordance with this disclosure) may be referred to as a "modulating valve." The pressure modulation can originate from a cyclical or otherwise recurrent release of fluid from the valve 100 through the outlet 180 in response to injection of a nearly constant flow of fluid into the valve 100. In addition, in certain examples, the pressure modulation provided by the example valve 100 does not rely on active pressure control. Instead, the example valve 100 passively controls the pressure modulation.

**FIG. 4** depicts a representative switching provided by the valve 100 or any other valve configured for operation or that operates in accordance with this disclosure. It should be appreciated that while the pressure modulation is depicted in **FIG. 4** as being a sawtooth-shaped waveform 400 switching between *Pₜₕ* and *P_{low}*, the specific time dependence of the pressure modulation, including the modulation amplitude, can be in accordance with any other substantially periodic profile. In one example, *P_{low}* can be nearly atmospheric pressure and Pth can range from about 4 psig to about 10 psig, depending on specific architectural parameters of the valve 100. Here, psig represents pound-force per inch above atmospheric pressure. Besides modulating pressure in a controlled volume, a valve in accordance with this disclosure (such as the valve 100 or any other valve described herein) can be utilized or otherwise leveraged for substantially periodic discharge of certain amount of gas from a compartment, such as compartment 110. For example, the valve 100 can be utilized in combination with a critical orifice at the input of the compartment defining a control volume.

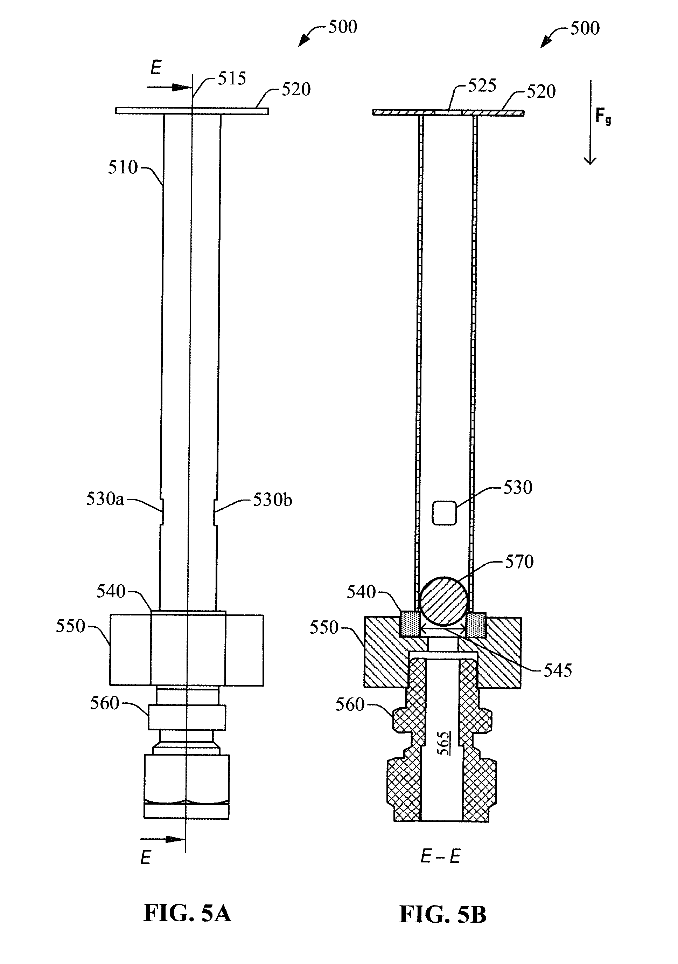

**FIGs. 5A-B** illustrate elevation and cross-sectional views of an example valve 500 in accordance with at least certain aspects of this disclosure. **FIG.** 5A illustrates a side elevation view of the valve 500, and **FIG. 5B** illustrates a cross-sectional view across the *E-E* segment shown in **FIG. 5A****.** The illustrated valve 500 can embody or can constitute the valve 100. The valve 500 can include an enclosure 510 having a circular or substantially circular section normal to the valve's longitudinal axis 515 and defining at least two openings 530a and 530b in the enclosure 510. Each opening 530a and 530b is configured to be a passageway for the release fluid from the valve 500. For instance, the enclosure 510 can be embodied in a solid tube *(e.g.,* a metal tube or a glass tube) having a circular cross-section of a specific diameter, and a smooth internal surface *(e.g.,* a polished or otherwise treated surface). In an example embodiment, the enclosure 510 can be a metal tube having a circular cross-section, and an internal diameter (or inside diameter (ID)) of about 8.103 mm (or about 0.319 inches) and an external diameter (or outside diameter (OD)) of about 9.525 (or about 0.375 inches). The enclosure 510 also has an end (which may be referred to as distal end) where a member 520 can be affixed or otherwise coupled (e.g., mechanically coupled, chemically coupled, a combination thereof, or otherwise) to the enclosure 510. The enclosure 510 also has a specific length of 80 mm. The member 520 (e.g., a slab, a disc, or any other flat member) can define one or more openings, such as the opening 525, wherein each of one or more opening can be configured to release fluid from the valve 500. In one example embodiment, the longitudinal axis 515 of the enclosure 510 can be oriented along the direction of earth's gravitational field.

In addition, in accordance with aspects of this disclosure as described herein, the enclosure 510 can be affixed or otherwise coupled to a member 540, which can be fitted or otherwise affixed to a member 550 configured to support, hold, or otherwise receive the member 540. It should be appreciated that, in one aspect, the member 540 and the member 550 can embody or can constitute the holding member 150. In one aspect, the member 540 can include or can be formed (e.g., machined or otherwise manufactured) from a magnetic or semi-magnetic material (such as a magnetic conductor or a semiconductor material). Accordingly, the member 540 may be referred to as a magnetic member. In another aspect, the member 550 may be referred to as a base member and can be formed from a non-magnetic material *(e.g.,* a conductor or semiconductor material) that can be rigid or semi-rigid in order to support, hold, or otherwise receive the magnetic member 540. In one example embodiment, the magnetic member 540 can be a permanent magnet ring having an internal diameter that permits fitting or otherwise receiving an end (which may be referred to as a proximal end) of the enclosure 510 into the ring. In such an example, the base member 550 can define an opening having a diameter that permits fitting or otherwise receiving the permanent magnetic member 540. In one example embodiment, the permanent magnet ring can have an OD of about 12.7 mm (or about 0.5 inches) and an ID of about 7.540600 mm (or about 0.296875 inches).

The example valve 500 can also include a ball 570, which can be formed of a rigid or semi-rigid magnetic material. In one example, the ball 570 can be solid throughout. The example ball 570 is configured (e.g., machined or otherwise manufactured) to fit within the enclosure 510 and move (upwards and downwards, for example) along the longitudinal axis 515 within the enclosure 510. For instance, in the example embodiment discussed herein in which the enclosure is a solid tube having circular cross-section, the diameter of the ball 570 can be about 7.9375 mm (or about 0.3125 inches). In certain example embodiments, the ball 570 can be formed from a magnetic metal *(e.g.,* iron; cobalt; nickel; a Fe-Ni alloy; a Fe-Co alloy; a Ni-Co alloy; a Fe-Ni-Co alloy; or a rare-earth-based magnets, such as a Nd-based magnet) and can have a diameter that is substantially the same as the internal diameter of the enclosure 510. In addition, the ball 570 can have a specific mass and can be submitted to a gravitational force **F_{g}**. It should be appreciated that, in certain examples, the ball 570 can embody or can constitute the locking member 140. As described herein, the member 520 can prevent the ball 570 from exiting the enclosure 510 and, thus, it may be referred to as a stoppage member. Although the valve 500 is illustrated as including the ball 570, in alternative embodiments, the valve 500 may include a solid magnetic disc, plate, slab, or piston as a substitute for the ball 570.

As illustrated, the valve 500 also can include a coupling device 560 that can define an inlet conduit 565. In one example, the inlet conduit 565 permits injection of fluid into the valve 500. In one embodiment, the coupling device 560 can be embodied in or can include a fitting (e.g., a male tube fitting or a female tube fitting) that can mechanically couple to the base member 550. In another embodiment, the coupling device 560 can be embodied in a threaded body formed from a rigid material, that threads onto the base member 550 or can be otherwise affixed, e.g., welded, onto the base member 550. The coupling device 560 can permit mechanical coupling to a compartment (*e.g*., compartment 220 in **FIG. 2****)** defining a control volume. For instance, as described herein, the coupling device 560 can be embodied in a threaded body or can include a threaded portion that can thread onto a coupling member (e.g., an extension nut) present in such a compartment. It should be appreciated that in certain embodiments, the locking device 560 can be embodied in a multi-member device, such as a composite customized extension nut, fitting, or similar locking device.

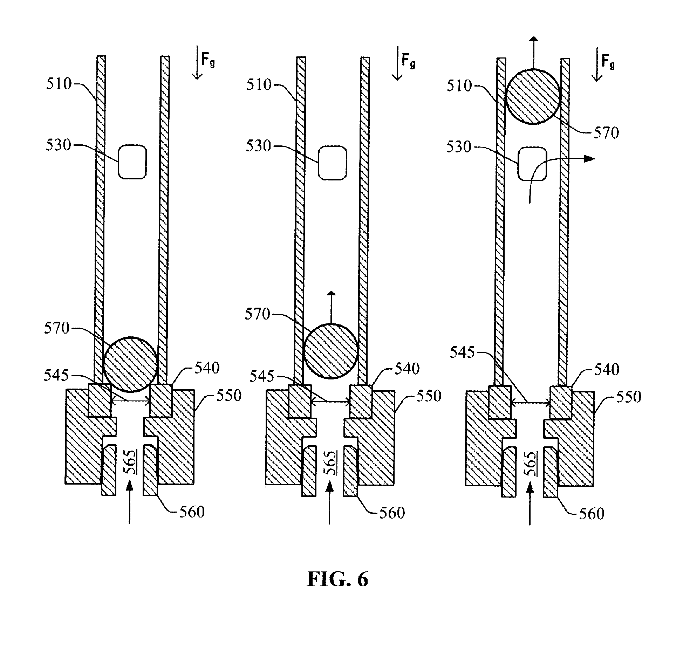

**FIG. 6** illustrates the operation of the example valve 500 in accordance with certain embodiments of the disclosure. With reference to **FIG. 6****,** in a scenario in which the valve 500 is coupled (e.g., fluidically coupled) to a compartment having a volume of fluid at pressure P, an amount of such fluid (represented with an arrow in **FIG. 6****)** enters the valve 500 via the inlet conduit 565. In one example implementation, such a compartment can be embodied in or can constitute the compartment 220 of **FIG. 2****.** The pressure P can exert a hydrostatic force F = *P · σ* (not depicted in **FIG. 6****)** on the solid ball 570, where σ represents the cross-sectional area of the opening 545 defined by the magnetic member 540. In situations where the fluid pressure that causes a force F that does not exceed the net holding force provided by the magnetic member 540 and the weight of the solid ball 570, the ball 570 can remain locked in mechanical contact with the magnetic member 540. It should be appreciated that, in one aspect, the weight of the ball 570 represents the gravitational force *F_{g}* = *m · g*, where *m* represents the mass of the ball 570 and g represents the acceleration of gravity. As the pressure of the volume of fluid increases to a pressure *P',* the fluid exerts a hydrostatic force F' = *P' · σ* (not depicted in **FIG. 6****)** on the ball 570 and, in response to such a force exceeding the net holding force provided by the magnetic member 540 and the weight of the ball 570, the solid ball no longer remains in mechanical equilibrium and is displaced towards the distal end of the enclosure 510. In response to the displacement of the ball 570, the hydrostatic force due to gas pressure can rapidly increases to *F^{"} = P^{'}* · Σ, where Σ represents the cross-sectional area of the enclosure 510 *(e.g.,* a metal tube). As the ball 570 moves upwards (represented with arrows in **FIG. 6****)** towards the distal end of the enclosure 510, a positive feedback can be created due to the reduction of the magnetic force exerted by the magnetic member 540 on the ball 570 and the ensuing increment in acceleration of the ball 570 provided by the larger imbalance between the hydrostatic force and the reduced magnetic force. In response to the ball 570 moving beyond the exhaust opening 530, the fluid pressure within the valve and in the control compartment can decrease due to the release of fluid through the opening 530, while the ball 570 continues its motion toward the distal end of the enclosure 510 due to inertia. For a fluid pressure *P"* that exerts a hydrostatic force *F*'" = *P*" - Σ less than the gravitational force *F_{g},* the gravitational force *F_{g}* can return the ball 570 back to locking position in mechanical contact with the magnetic member 540. As fluid continues to be injected into the valve 500 after the ball 570 is repositioned in locking position, fluid pressure increases again until the ball 570 is displaced upwards, repeating the pressure release described herein. Further locking of the ball 570 and additional injection of fluid into the valve 500 can cause the lock-release cycle to be repeated, with the ensuing time-dependent switching between a high pressure state and a low pressure state (see, *e.g.,* **FIG. 4****).**

The example enclosure 510 can have a cross-sectional area (E) that can be different (e.g., greater than) the cross-sectional area (σ) of the opening 545defined by the magnetic member 540. Accordingly, in one aspect, for a predetermined fluid pressure P, the hydrostatic force that is exerted on the ball 570 when the valve 500 is closed-*e.g*., the ball 570 is in mechanical contact with the magnetic member 540-can be different from (e.g., lesser than) the hydrostatic force that is exerted on the ball 570 when the valve 500 is open-*e.g*., the solid ball is displaced from the locking position and no longer in mechanical contact with the magnetic member 540. Such a difference in hydrostatic pressure can permit more reliable operation of the valve 500 by increasing the hydrostatic pressure exerted on the ball 570 when it is removed from its equilibrium (e.g., locked) position within the valve 500.

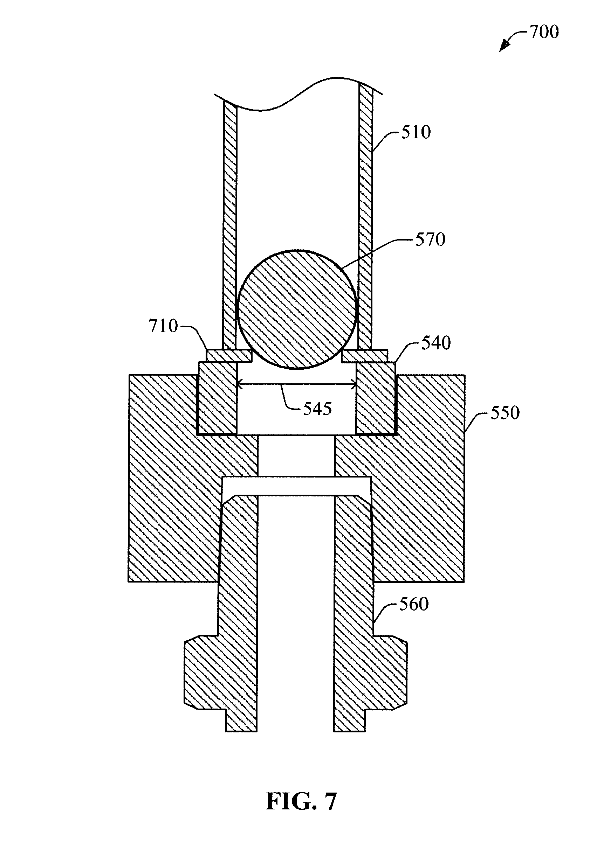

In addition, the example valve can include other devices or members that permit adjusting the passive control aspects of the valve. **FIG.** 7 illustrates an example of a valve 700 including a member for adjusting the passive control aspects in accordance with certain aspects of this disclosure. With reference to **FIGs. 5A-B** and 7, the valve 700 has a similar architecture as the valve 500, and differs therefrom in at least in that the valve 700 includes a member 710 or device (which may be referred to as "washer member" or "washer"). The washer member 710 can be in mechanical contact with (e.g., abutting) the magnetic member 540, and can be disposed substantially at the proximal end of the enclosure 510. The washer member 710 includes a passageway or hole therethrough that defines an opening configured to provide a static resting position for the ball 570 and/or to receive a portion of the ball 570 and to prevent the ball 570 from further passing into the opening 545 defined by the passageway through the magnetic member 540. In one example, the hole of the washer member 710 can have a diameter of about 4.7625 mm (or about 3/16"). As illustrated, the enclosure 510 can be coupled (mechanically, chemically, or otherwise) to the washer member 710. For instance, the washer member can glued or otherwise chemically affixed to a top surface of the magnetic member 540.

In one example embodiment, the washer member 710 protects the magnetic member 540 *(e.g.,* a brittle magnet) from repeated mechanical shock caused by the cyclical contact of the ball 570 returning to its equilibrium position (or locking position). Through placement of the washer member 710 between the magnetic member 540 and the ball 570, the ball 570 makes cyclical mechanical contact with the washer member 710 and not the magnetic member 540. In another example, the washer member 710 *(e.g.,* a flat or substantially flat member with an opening therethrough) can have a thickness that increases the distance d between the magnetic member 540 and the center of mass of the ball 570. Therefore, in one aspect, the washer member 540 can reduce the fluid pressure (*e.g., Pₜₕ*) at which the ball 570 can be removed from its locking position. In yet another aspect, the washer member 710 can reduce the effective cross-sectional area of the opening 545 defined by the magnetic member 540, by having an opening with a diameter that is less than the diameter of the opening 545 defined by the magnetic member 540. Thus, the washer member 710 can increase the fluid pressure *(e.g., Pₜₕ*) at which the ball 570 can be removed from the locking position. Accordingly, the fluid pressure at which the ball 570 can be released from its locking position can be adjusted based at least on the thickness of the washer member 710 and the cross-sectional area of the opening through the washer member 710.

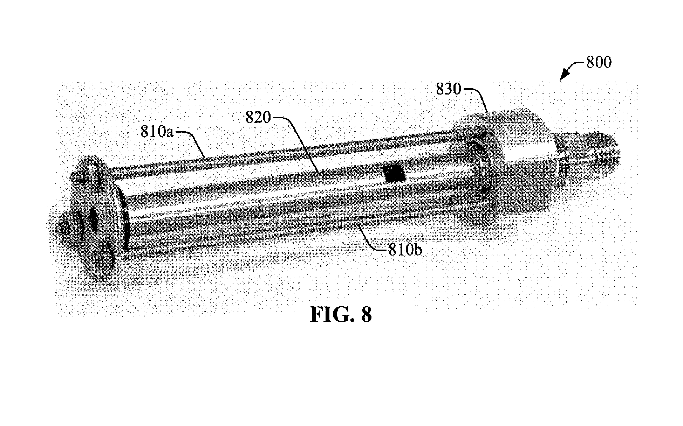

**FIG. 8** illustrates a perspective view of an example embodiment 800 of the valve 700 in accordance with certain aspects of this disclosure. As described herein, the exemplified valve 700 has a similar architecture to the valve 500, and includes a slab or washer device in accordance with aspects of this disclosure. As illustrated in **FIG. 8****,** at least certain portions of the valve 700 can be manufactured from metal and can include three stability shafts, or bars, two of which (shafts 810a and 810b) readily observed. The metals that constitute the valve 700 can include non-magnetic metals and magnetic metals. For instance, the tube 820 (which can embody the enclosure 510, for example) and the base member 830 (which can embody the member 550, for example) can be formed from a non-magnetic metal. Each of such stability shafts has a first end mechanically coupled to the stoppage member 520 and a distal second end mechanically coupled to the base member 540. In one example embodiment, each of such stability shafts, including shaft 810a and 810b, can be made of a solid cylindrical piece of metal. While the example embodiment 800 presents three stability shafts, fewer or greater numbers of stability shafts may be included based at least on the intended use of the valve and design considerations.

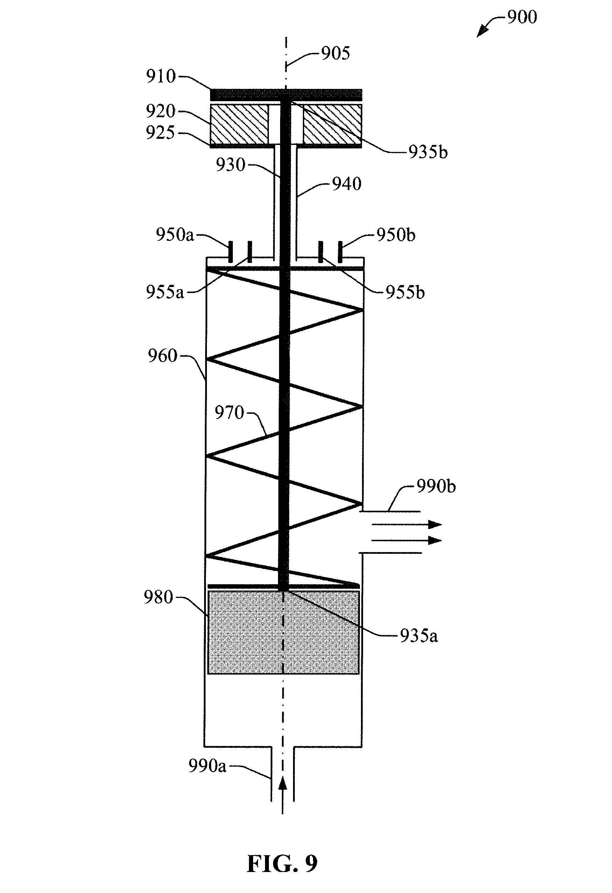

As described herein in connection with the example valve 100 illustrated in **FIG. 1****,** the holding member 150 and the restoration member 160 can be disposed in alternative configurations with respect to the enclosure 110. **FIG. 9** illustrates an example of a valve 900 in accordance with this disclosure that leverages such an alternative configuration in accordance with at least certain aspects of the disclosure. The example valve 900 can embody or can constitute the valve 100. The valve 900 can include an enclosure 960 that includes multiple openings that can be respectively associated with multiple conduits. For instance, the enclosure 960 can be a solid tube *(e.g.,* a metal tube or a glass tube) having a circular or substantially circular cross-section of a specific diameter, and a smooth internal surface *(e.g.,* a polished or otherwise treated surface). Solid tubes having non-circular cross-sections also are contemplated in this disclosure. In one example, a first opening of the multiple openings in the enclosure 960 can be an inlet conduit 990a. The inlet conduit 990a can be configured to provide a passageway through an exterior of the enclosure 960 and to receive an injection of a fluid (*e.g.,* a gas, a liquid, or a mixture thereof) into the enclosure 960. While not shown, the example valve 900 also can include a coupling device disposed adjacent to the inlet conduit 990a, where the coupling device couples the valve 900 to a compartment (e.g., compartment 220 in **FIG. 2****)** defining a control volume having a fluid at a pressure P. In another example, other openings (e.g., 955a and 955b) of the multiple openings can be passageways through the exterior of the enclosure 960 and provide respective outlet conduits for the valve 900, such that each opening is configured to release at least a portion of the fluid contained in the enclosure 960. More specifically a second opening 955a and a third opening 955b of the multiple openings can be associated, respectively, with a first outlet conduit 950a and a second outlet conduit 950b. The second and third openings 950a and 950b may be referred to as vent orifices and, as illustrated, can be disposed at an end (which may be referred to as a distal end) of the enclosure 960. In addition, a fourth opening can provide a passageway through the exterior of the enclosure 960 and provide a third outlet conduit 990b, which may be referred to as an exhaust conduit.

Moreover, the multiple openings defined by the enclosure 960 can include an opening associated with (e.g., defined by) a shaft 940 configured to receive an elongated member 930 therethrough. The elongated member 930 can include a solid beam (which may be rigid or semi-rigid). As illustrated, a first end 935a of the elongated member 930 is coupled *(e.g.,* mechanically coupled, chemically coupled, a combination thereof, or otherwise) to a member 980 *(e.g.,* a piston, a plate, or slab) and an opposing distal second end 935b of the elongated member 930 is affixed or otherwise coupled to a member 910 (such as a plate, a slab, a disc, a ball, a cone, or the like). In one example embodiment, the elongated member 930 can transmit motion between the member 980 *(e.g.,* a piston, a plate, a slab, or the like) and the member 910. Accordingly, the elongated member 930 may be referred to as a transmission member. The first and second ends 935a and 935b of the elongated member 930 may be referred to, respectively, as the proximal end and distal end of the elongated member 930. The member 980 can be configured (e.g., machined or otherwise manufactured) to fit within the enclosure 960, and to move along the longitudinal axis 905 (e.g., upwards and downwards, for example) within such an enclosure. Therefore, in one example, the cross-section of the member 980 can be the same or substantially the same shape and size as the internal cross-sectional shape of the enclosure 960. In addition, the member 910 can be formed of a rigid or semi-rigid magnetic material, and can be embodied in or can include a solid magnetic disc, plate, slab, piston, ball, cone, or the like. In certain example embodiments, the member 910 can be formed from a magnetic metal (e.g., iron; cobalt; nickel; rare-earth-based magnets, such as a Nd-based magnet; a Fe-Ni alloy; a Fe-Co alloy; a Ni-Co alloy; a Fe-Ni-Co alloy; a material including one or more of *R,* Fe, Ni, or Co, where R is a rare earth element, such as Nd; or the like). It should be appreciated that, in other embodiments of the valve 900, other solid members (e.g., a solid sphere or, more generally, a solid ellipsoid) can embody the member 910.

In certain example embodiments, the shaft 940 is coupled (e.g., mechanically coupled, chemically coupled, a combination thereof, or the like) to a base plate 925 (or base member 925). The base plate 925 can have a flat or substantially flat surface to support, hold, or otherwise receive a magnetic member 920. In addition, the base member 925 can include an opening or passageway therethrough to permit passage therethrough of the member 930. In one example, the base member 925 can be formed from a non-magnetic material *(e.g.,* a conductor or semiconductor material) that can be rigid or semi-rigid in order to support, hold, or otherwise receive the magnetic member 920. Further, the magnetic member 920 can include or can be formed (*e.g.*, machined or otherwise manufactured) from a magnetic or semi-magnetic material (such as a magnetic conductor or a semiconductor material).

In another aspect, as illustrated, the magnetic member 920 can be affixed or otherwise mounted to the base member 925. The magnetic member 920 also can include an opening or passageway though the member 920 to permit passage of the member 930 therethrough. In one example embodiment, the magnetic member 920 can be a permanent magnet ring having an internal diameter defining the opening or passageway that permits fitting or otherwise receiving the member 930 therethrough. It should be appreciated that, in one aspect, the base member 925 and the magnetic member 920 can embody or can constitute the holding member 150 described in connection with the example valve 100.

The example valve 900 also can include a spring 970 disposed within the enclosure 960. One end of the spring 970 can be coupled to the distal end of the transmission member 930 and/or the member 980, and the other end of the spring 970 can affixed, mounted, or otherwise coupled in the vicinity of the distal end of the enclosure 960. Although the spring 970 is illustrated and described herein, it should be appreciated that other elastic members (such as a flexible metal sheet or the like) that can provide similar or the same functionality as the spring 970 can be contemplated in this disclosure. It should further be appreciated that, in another aspect, the spring 970 provides a restoration mechanism that permits operation of the example valve 900 at an arbitrary orientation, without limitation to, for example, aligning or otherwise disposing the longitudinal axis 905 of the enclosure 960 along the direction of earth's gravitational field.

In one example, fluid can enter or is otherwise injected into the valve 900 via the inlet conduit 990a, and can exert a hydrostatic force on the member 980 that can be determined by the product between the pressure of the fluid and the cross-sectional area of the member 980. Additional injection of fluid into the valve 900 can increase the hydrostatic force that is applied to the member 980. While such a hydrostatic force is less than the holding magnetic force exerted on the member 910, the valve 900 can remain locked (or shut). In response to the hydrostatic force increasing to a magnitude (or strength) greater than the holding magnetic force, the member 910 mechanically decouples from the magnetic member and is displaced upwards *(e.g.,* from the proximal end to the distal end of the valve 900) along the longitudinal axis 905. By way of the transmission member 930, the member 980 also moves upward along the longitudinal axis 905, compressing the spring 970 and, in response being submitted to an elastic restoration force that pushes the member 980 towards the proximal end of the valve 900. When the member 980 moves to a position above the outlet conduit 990b, at least a portion of the fluid within the valve 900 is released through the outlet conduit 990b. The release of the fluid through the outlet conduit 990b results in a reduction in the pressure in the fluid within the valve 900. In addition, in response to the member 980 being submitted to a smaller hydrostatic force, the elastic restoration force exerted by the spring 970 on the member 980 displaces or otherwise moves the member 980 towards the distal end of the valve 900. When the member 980 moves to a position substantially completely below the outlet conduit 990b, the valve 900 is again closed and pressure of the fluid within the valve can begin to increase in response to further injection of fluid into the inlet conduit 990a of the valve 900. Such open-shut cycle of the valve 900 can yield a time-dependent switching between a high pressure and a low pressure, as illustrated in **FIG. 4****,** for example.

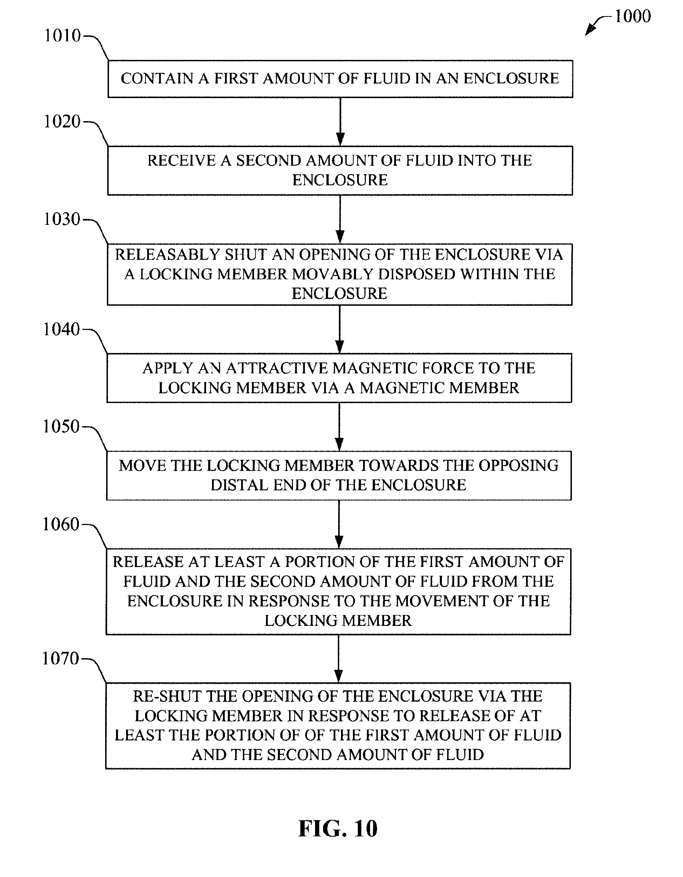

In view of the aspects described herein, examples of a technique for management of optical noise in optical spectroscopy in accordance with at least certain aspects of the disclosure can be better appreciated with reference to the flow chart in **FIG. 10****.** For purposes of simplicity of explanation, the examples of the techniques disclosed herein are presented and described as a series of blocks (with each block representing an action or an operation in a method, for example). However, it is to be understood and appreciated that the disclosed techniques (e.g., process(es), procedure(s), method(s), and the like) are not limited by the order of blocks and associated actions or operations, as some blocks may occur in different orders and/or concurrently with other blocks from that are shown and described herein. For example, the various techniques of the disclosure can be alternatively represented as a series of interrelated states or events, such as in a state diagram. Furthermore, not all illustrated blocks, and associated action(s) or operation(s), may be required to implement a technique in accordance with one or more aspects of the disclosure. In addition, two or more of the disclosed techniques can be implemented in combination with each other, to accomplish one or more features and/or advantages described herein.

It should be appreciated that, in certain embodiments, at least a portion of the techniques of the disclosure can be retained on an article of manufacture, or computer-readable storage medium in order to permit or facilitate transporting and transferring such techniques to a computing device (such as a microcontroller, a programmable logic controller, a programmable logic relay, and the like) for execution, and thus implementation, by a processor of the computing device or for storage in a memory thereof or functionally coupled thereto. In one aspect, one or more processors, such as processor(s) that implement (e.g., execute) one or more of the disclosed techniques, can be employed to execute instructions retained in a memory, or any computer- or machine-readable storage medium, to implement the techniques described herein. The instructions can embody or can constitute at least a portion of the techniques, and thus can provide a computer-executable or machine-executable framework to implement the techniques described herein.

**FIG. 10** presents a flowchart of an example of a method 1000 for pressure modulation according with at least certain aspects of the disclosure. At block 1010, a first amount of fluid (e.g., a gas, a liquid, a combination thereof) can be contained in an enclosure. In one example, the enclosure has a proximal end and an opposing distal end. At block 1020, a second amount of fluid can be received into the enclosure. In one aspect, the second amount of fluid can be received via an inlet opening of the disclosure. At block 1030, an opening of the enclosure can be releasably shut via a locking member movably disposed within the enclosure. In one example, the locking can be movably disposed within the enclosure between the distal end and the inlet opening. The opening can be associated with the inlet opening and the first amount of fluid and the second amount of fluid can exert a hydrostatic force on the locking member. At 1040, an attractive magnetic force can be applied to the locking member via a magnetic member (e.g., a magnetic member 540, such as permanent magnet ring). At block 1050, the locking member can be moved towards the opposing distal end of the enclosure in response to the hydrostatic force being greater than the attractive magnetic force. At block 1060, at least a portion of the first amount of fluid and the second amount of fluid can be released from the enclosure in response to the movement of the locking member. For instance, such quantity of fluid can be released via an outlet opening of the enclosure. At block 1070, the opening of the disclosure can be re-shut via the locking member in response to release of at least the portion of the fluid.

Embodiments of the operational environments and techniques (procedures, methods, processes, and the like) are described herein with reference to block diagrams and flowchart illustrations of methods, systems, apparatuses and computer program products. It can be understood that each block of the block diagrams and flowchart illustrations, and combinations of blocks in the block diagrams and flowchart illustrations, respectively, can be implemented by computer-accessible instructions. In certain implementations, the computer-accessible instructions may be loaded or otherwise incorporated into onto a general purpose computer, special purpose computer, or other programmable information processing apparatus to produce a particular machine, such that the operations or functions specified in flowchart block(s) can be implemented in response to execution at the computer or processing apparatus.

Unless otherwise expressly stated, it is in no way intended that any technique, protocol, procedure, process, or method set forth herein be construed as requiring that its acts, operations, or steps be performed in a specific order. Accordingly, where a process or method claim does not actually recite an order to be followed by its acts, operations, or steps, or it is not otherwise specifically recited in the claims or descriptions of the subject disclosure that the steps are to be limited to a specific order, it is in no way intended that an order be inferred, in any respect. This holds for any possible non-express basis for interpretation, including matters of logic with respect to arrangement of steps or operational flow; plain meaning derived from grammatical organization or punctuation; the number or type of embodiments described in the specification or annexed drawings, or the like.

As used in this application, the terms "component," "environment," "system," "platform," "architecture," "interface," "unit," "member," "module," and the like are intended to refer to an entity related to an operational apparatus with one or more specific functionalities. Such an entity may be either hardware, software, software in execution, or a combination thereof. As an example, a component can be an apparatus that provides specific functionality by means of mechanical parts, without reliance on electronic or electromechanical parts. As yet another example, a component may be an apparatus with specific functionality provided by mechanical parts operated by electric or electronic circuitry that is controlled by a software application or firmware application executed by a processor, wherein the processor can be internal or external to the apparatus and can execute at least a part of the software or firmware application. The terms "component," "environment," "system," "platform," "architecture," "interface," "unit," "module" can be utilized interchangeably and can be referred to collectively as functional elements.

Conditional language, such as, among others, "can," "could," "might," or "may," unless specifically stated otherwise, or otherwise understood within the context as used, is generally intended to convey that certain implementations could include, while other implementations do not include, certain features, elements, and/or operations. Thus, such conditional language generally is not intended to imply that features, elements, and/or operations are in any way required for one or more implementations or that one or more implementations necessarily include logic for deciding, with or without user input or prompting, whether these features, elements, and/or operations are included or are to be performed in any particular implementation.

What has been described herein in the present specification and annexed drawings includes examples of systems, apparatuses, devices, techniques, and computer-program products that can provide pressure modulation and/or controlled release of specific amounts of fluid. It is, of course, not possible to describe every conceivable combination of elements and/or methods for purposes of describing the various features of the disclosure, but it can be recognize that many further combinations and permutations of the disclosed features are possible. Accordingly, it may be apparent that various modifications can be made to the disclosure without departing from the scope or spirit thereof. In addition or in the alternative, other embodiments of the disclosure may be apparent from consideration of the specification and annexed drawings, and practice of the disclosure as presented herein. It is intended that the examples put forward in the specification and annexed drawings be considered, in all respects, as illustrative and not restrictive. Although specific terms are employed herein, they are used in a generic and descriptive sense only and not for purposes of limitation.

## Claims

1. A device for pressure modulation, comprising:
an enclosure comprising:
a proximal end and an opposing distal end;
an inlet opening disposed at the proximal end and configured to receive a fluid into the enclosure; and
an outlet opening disposed between the inlet opening and the distal end and configured to release at least a portion of the fluid from the enclosure;
a first member movably disposed within the enclosure between the distal end and the inlet opening; and
a second member mechanically coupled to the enclosure and disposed between the inlet opening and the outlet opening, the second member at least magnetically coupled to the first member, the second member configured to apply an attractive magnetic force to the first member.

2. The device of Claim 1, wherein the enclosure is substantially hermetically sealed and has a first cross-section, and wherein the first member is a magnetic solid having a second cross-section, further wherein the second cross-section is substantially the same as the first cross section of the enclosure.

3. The device of Claim 2, wherein the second member is a permanent magnet.

4. The device of Claim 3, wherein the first member is substantially spherical or substantially ellipsoidal.

5. The device of Claim 1, further comprising a third member having a predetermined thickness and coupled to the second member, wherein the thickness offsets a mechanical equilibrium position of the first member with respect to the second member.

6. The device of Claim 1, further comprising a stoppage member disposed at the distal end of the enclosure, wherein the stoppage member prevents release of the first member from the enclosure.

7. A device for pressure modulation, comprising:
an enclosure comprising:
a proximal end and an opposing distal end;
an inlet opening disposed at the proximal end and configured to receive a fluid into the enclosure; and
an outlet opening disposed between the inlet opening and the distal end and configured to release at least a portion of the fluid from the enclosure;
a shaft coupled to the enclosure at the opposing distal end of the enclosure, where the shaft has a distal end opposing the opposing distal end of the enclosure;
a first member movably disposed within the enclosure between the opposing distal end and the inlet opening; and
a second member mechanically coupled to the shaft at about the distal end of the shaft;
a transmission member coupled to the first member at a proximal end of the transmission member; and
a locking member mechanically coupled to the transmission member at an opposing distal end of the transmission member, wherein the locking member is at least magnetically coupled to the second member, and wherein the second member is configured to apply an attractive magnetic force to the locking member.

8. The device of Claim 7, wherein the enclosure is substantially hermetically sealed and has a first cross-section, and wherein the first member has a second cross-section, further wherein the second cross-section is substantially the same as the first cross section of the enclosure.

9. The device of Claim 7, wherein the second member is a permanent magnet.

10. The device of Claim 9, wherein the first member is one of a disc or a piston.

11. The device of Claim 7, further comprising an elastic member having a first end affixed to a side of the first member, wherein the elastic member has a second end affixed to substantially the distal end of the enclosure.

12. The device of Claim 11, wherein the elastic member is a spring.

13. A valve, comprising:
enclosure means for containing a first amount of fluid, the enclosure means comprising a proximal end and an opposing distal end
inlet means for receiving a second amount of fluid into the enclosure means;
outlet means for releasing at least a portion of the fluid from the enclosure;
locking means for releasably shutting an opening of the enclosure means, wherein the opening is associated with the inlet means; and
holding means for applying an attractive magnetic force to the locking means,
wherein the fluid exerts a hydrostatic force to the locking means, and in response to the hydrostatic force being greater than the magnetic force, the locking means moves towards the opposing distal end of the enclosure,
wherein in response to the movement of the locking means, at least a portion of first amount of fluid and the second amount of fluid is released via the outlet means, and
wherein the locking means shuts the opening in response to release of at least the portion of the fluid.

14. The valve of Claim 13, wherein the enclosure means for containing the first amount of fluid is substantially hermetically sealed and has a first cross-section, and
wherein the locking means for releasably shutting the opening comprises a magnetic solid having a second cross-section, further wherein the second cross-section is substantially the same as the first cross section of the enclosure.

15. The valve of Claim 13, further comprising means for offsetting a mechanical equilibrium position of the locking means for releasably shutting an opening of the enclosure means.

16. The valve of Claim 13, further comprising stoppage means for preventing release of the locking means from the enclosure.

17. A method for pressure modulation, comprising:
containing a first amount of fluid in an enclosure, wherein the enclosure has a proximal end and an opposing distal end
receiving a second amount of fluid into the enclosure via an inlet opening;
releasably shutting an opening of the enclosure via a locking member movably disposed
within the enclosure between the distal end and the inlet opening, wherein the opening is associated with the inlet opening, and wherein the first amount of fluid and the second amount of fluid apply a hydrostatic force to the locking member; and
applying an attractive magnetic force to the locking member via a magnetic member,
moving the locking member towards the opposing distal end of the enclosure in response to the hydrostatic force being greater than the attractive magnetic force,
releasing at least a portion of first amount of fluid and the second amount of fluid in response to the movement of the locking member; and
re-shutting the opening via the locking means in response to release of at least the portion of the fluid.

18. The method of Claim 17, wherein the enclosure is substantially hermetically sealed and has a first cross-section, and wherein the locking member comprises a magnetic solid having a second cross-section, further wherein the second cross-section is substantially the same as the first cross section of the enclosure.

19. The method of Claim 17, further comprising offsetting a mechanical equilibrium position of the locking member with respect to the magnetic member, wherein the magnetic member is a permanent magnet.

20. The method of Claim 17, further comprising preventing release of the locking member from the enclosure.
